Europäisches Patentamt

**European Patent Office**

Office européen des brevets

(19)

(11) Publication number: **0 087 954**

**A1**

(12) **EUROPEAN PATENT APPLICATION**

(21) Application number: **83301023.4**

(22) Date of filing: **25.02.83**

(51) Int. Cl.³: **C 10 J 3/54**
C 10 J 3/56, C 10 J 3/50
C 10 J 3/52, C 10 J 3/84

(30) Priority: **01.03.82 GB 8205916**
**08.06.82 GB 8216557**

(43) Date of publication of application:
**07.09.83 Bulletin 83/36**

(84) Designated Contracting States:
**AT BE CH DE FR GB IT LI LU NL SE**

(71) Applicant: **THE ENERGY EQUIPMENT COMPANY LIMITED**
**Energy House Hockliffe Street**
**Leighton Buzzard Bedfordshire LU7 8HE(GB)**

(72) Inventor: **Caplin, Peter Bewicke**
**41 Harfield Road**
**Sunbury-on-Thames Middlesex, TW16 5PT(GB)**

(74) Representative: **Connor, Terence Kevin et al,**
**FITZPATRICKS Kern House 61/62 Lincoln's Inn Fields**
**London WC2B 6EX(GB)**

(54) **Combustible gas producer plant.**

(57) Combustible gas producer (10) plant includes a fluidised bed (11) of inert particulate material to which fuel is fed for partial combustion. The bed is fluidised with steam and/or air and a combustible gas is produced by the incomplete combustion of fuel the dissociation of steam and the water gas reaction in the hot bed. At least part of the combustible gas produced is recycled and passed back into the bed. The steam may be generated by a boiler/superheater (19) through which the combustible gases exiting from the bed pass. Gas tight fuel feeding (27) and ash removal arrangements (80) are described enabling the pressure in the bed to be maintained super-atmospheric. Control of the plant is effected by an on-line microprocessor.

FIG. 1.

EP 0 087 954 A1

FIELD OF INVENTION

The invention concerns combustible gas producer plant, in particular combustible gas producer plant incorporating fluidised beds of inert particulate material.

BACKGROUND ART

The production of a combustible gaseous fuel by passing a mixture of steam and air through a bed of hot coke or coal is known. Combustible gas produced in this way, known as producer gas, had wide application for firing industrial furnaces before the ready availability of more convenient fuel oils and natural gases from the petroleum industry.

The rising costs of fuel oils and natural gases in the recent past has given rise to a need for a system enabling the cheap production of a combustible gas.

Known producer gas plants are highly selective in respect of the type of fuel they will receive, and to give the best results must be operated with closely size-graded, low volatile content, solid fuels which after combustion leave little ash, any ash residue having a high fusion temperature. The known plants are labour intensive and require skilled operation to maintain consistently good quality producer gas. Difficulties found in operating the known systems include the carry-over of volatiles with the generated gas which results in the deposition of, possibly combustible, materials in the gas distribution system downstream of the plant. The deposition of such materials can lead to serious fouling of the distribution systems which must be "burnt out" at regular intervals resulting in a level of atmospheric pollution generally found unacceptable today.

The relatively high cost of low volatile content fuels such as anthracites, coke or hard steam coal, highlights the need for a gasification plant which can be used with low quality, tarry, high moisture and ash content, ungraded, fuels.

## DISCLOSURE OF INVENTION

A first aspect of the invention provides a method of making combustible gas including passing gas to a bed of inert particulate material to fluidise the bed, feeding fuel to the bed for combustion therein, generating and passing steam into the bed such that the partial combustion of fuel, and the partial dissociation and reaction of steam in the bed generates a combustion gas, the method further including recycling at least part of the combustible gas produced back into the bed.

A second aspect of the invention provides combustible gas producer plant including a chamber with a gas outlet for housing a bed of inert particulate material, means for passing gas to fluidise the bed of inert particulate material, means for feeding fuel to the bed for combustion therein, means for generating and passing steam into the bed, means for recycling at least part of the gas leaving the chamber by said outlet back into the bed and means for controlling the plant such that the partial combustion of fuel and the partial dissociation and reaction of steam in the bed generate a combustible gas.

The plant preferably includes an adjustable valve operable to vary the amount of recycled combustible gas passed into the bed.

Advantageously the plant includes a filter through which the combustible produced gas taken from the gas outlet is passed in which filter any dust particles, low volatile tars or other contaminents carried by the combustible gas are extracted and are further reacted. The filter preferably includes coke, or coke in a bed of inert particulate material, through which the combustible gas passes.

Preferably the fuel feeding means comprises a first hopper to which fuel is fed and which has a closeable outlet aperture leading to a second hopper having a closeable outlet leading to a fuel feeder for feeding the fuel to said chamber, means operable to close each said outlet aperture and control means for controlling said closing means to ensure that at least one of said apertures is always closed to provide a gas seal between said chamber and atmosphere.

The plant with advantage includes ash removal means for removing ash and debris from the bed whilst maintaining a gas seal between the bed and atmosphere.

## INTRODUCTION TO THE DRAWINGS

Embodiments of the invention will be described with reference to the accompanying drawings in which:-

Figure 1 is a highly diagrammatic view of a gas producer plant embodying the invention;

Figure 2 is a similar view of a modified form of the plant of Figure 1;

Figure 3A is a diagrammatic view of a fuel feed arrangement included in the plants of Figures 1 and 2;

Figure 3B shows a modified form of the arrangement of Figure 3A;   and

Figure 4 is a diagrammatic view of an ash removal device incorporated in the plant of Figures 1 and 2.

## DESCRIPTION OF EMBODIMENTS

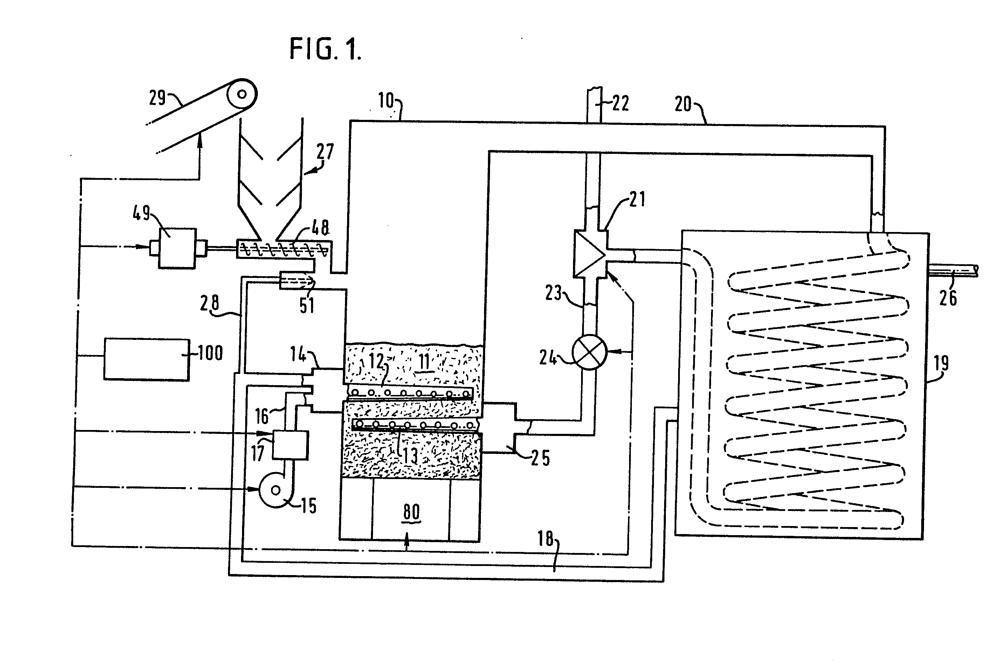

The combustible gas producer plant shown in Figure 1 includes a chamber 10 housing a fluidised bed 11 of inert particulate material such as sand having a small particle size e.g. less than 3 mm.

Bed 11 is arranged to be fluidised with gas from two arrays of sparge pipes 12 and 13 located one above of the other to extend generally horizontally through bed 11. Sparge pipes 12 are fed with fluidising gas from a plenum chamber 14 arranged to receive steam. Air is fed to plenum chamber 14 from a blower 15 via an air line 16 in which a heater 17 is provided to pre-heat air fed to the plenum chamber 14 when required, and steam is fed from a line 18 coupled to a waste heat boiler and superheater 19. Hot gases generated in bed 11 are fed from chamber 10 via a gas outlet and duct 20 to the boiler/superheater 19 as shown. In the boiler/superheater 19 gases from bed 11 give up heat to generate steam and thereafter pass for use to a gas distribution system via an adjustable diverter valve 21 and line 22. Part of the gas leaving boiler/ superheater 19 is diverted by valve 21 to line 23 and pumped by a pump 24 to a plenum chamber 25 passing gas to the sparge pipes 13.

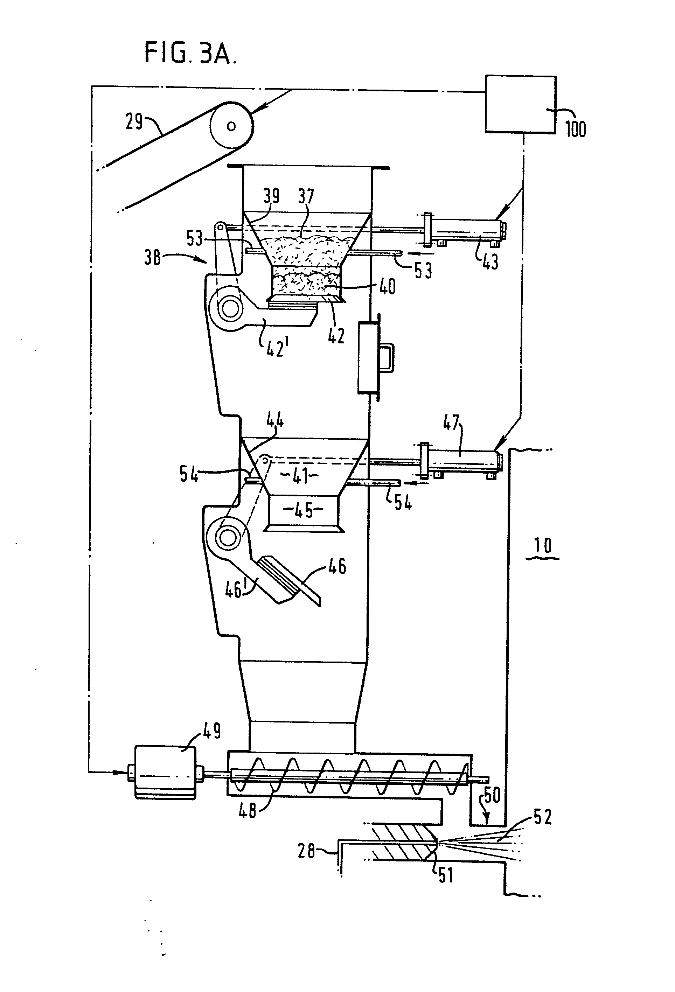

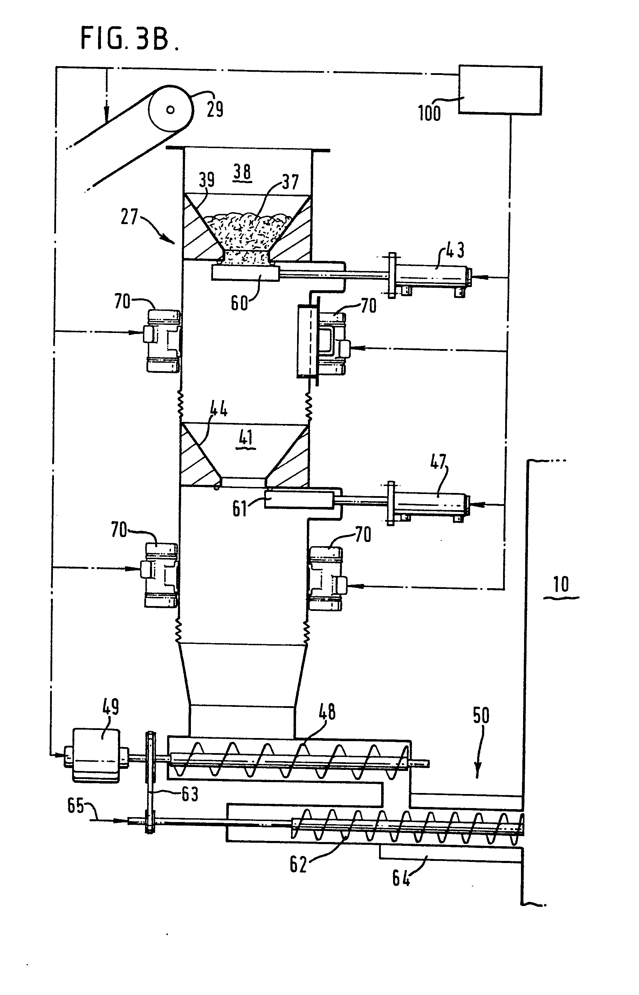

Water is fed to the boiler/superheater 19 from a source (not shown) via a feed line 26. Fuel is fed to the chamber 10 via a feeding arrangement 27 (described in detail with reference to Figure 3) to which steam may be fed via a steam line 28, and to which fuel is fed by a feed drive 29.

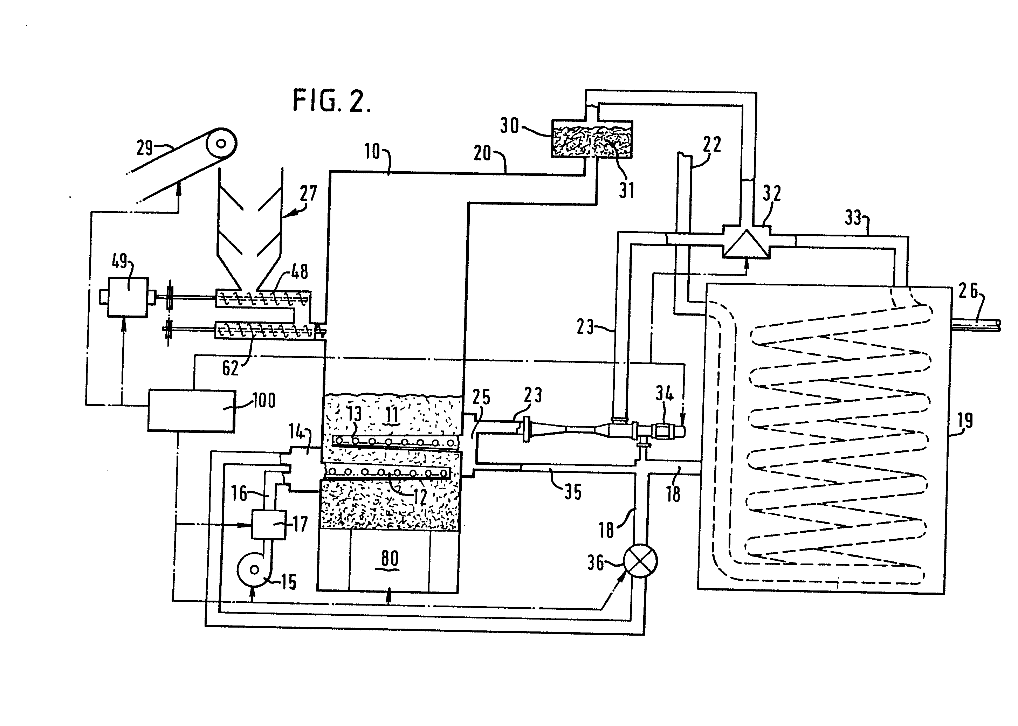

Figure 2 shows a modified plant parts of which are identical with parts of the plant shown in Figure 1, the common parts are given the same reference numerals in the two figures and will not further be described with reference to Figure 2.

The plant shown in Figure 2 provides that gas in duct 20 passes through a filter 30 including a filter material 31 with a high carbon content. A suitable filter material would be coke. The filtering coke may be in the form of a bed of coke through which the made gas passes or in the form of a charge of coke in a bed of inert particulate material substantially similar to the bed 11 in chamber 10.

A part of the combustible gas leaving the filter 30 is diverted via adjustable diverter valve 32 to line 23 for recycling into bed 11 whilst the major part of this gas flow passes along duct 33 to the boiler/superheater 19. It is noted that in the arrangement of Figure 2 the whole of the gas leaving boiler/superheater 19 passes via line 22 to a gas distribution system.

The steam outlet of boiler/superheater 19 is used to drive a jet or venturi compressor 34 pumping gas in line 23 to plenum chamber 25.

The plant shown in Figure 2 further provides that steam may be passed directly from line 18 to plenum chamber 25 via a branch steam line 35 and that the flow of steam to plenum chamber 14 is controlled by an adjustable valve 36 in line 18. It will be noted that in the arrangement of Figure 2 the pipes 13 feeding recycle gas into the bed are disposed above the pipes 12 feeding air into the bed in distinction to the arrangement shown in Figure 1.

Figure 3A illustrates a fuel feeding arrangement 27 shown in Figures 1 and 2 in more detail. Fuel 37 from the feed drive 29 falls initially into a top hopper 38 the bottom wall 39 of which is conically shaped and provided with an aperture 40 as shown. The fuel 37 can fall through aperture 40 into a bottom hopper 41 whenever aperture 40 is not closed by a plug 42. Plug 42 is mounted on the end of a pivotted arm 42' and driveable between positions in which it opens or closes aperture 40 by a pneumatic and/or hydraulic system indicated generally at 43.

The bottom hopper 41 is also provided with a conical bottom wall 44 having an aperture 45 formed in it. Aperture 45 is closeable by a plug 41 driveable in the manner of plug 42, between positions in which it opens or closes aperture 45 by a pneumatic and/or hydraulic control system 47.

Any fuel which enters lower hopper 41 falls through aperture 45 (when the aperture is open as shown in Figure 2) onto an archimedian screw 48 driven by a variable speed motor 49. Screw 48 acts to carry fuel to a fuel feeder 50 at a rate which may be varied in accordance with demand on the plant. The final fuel feed 50 comprises a jet or jets 57 fed with steam from the line 28 and the fuel is entrained by the stream of steam formed by the jet or jets 51 and carried into chamber 10 through a rectangular aperture 52 formed in the wall of the chamber.

Each hopper, 38 and 41, is provided with jets, 53 and 54 respectively, through which air or, preferably, carbon dioxide is pumped, preferably cyclically, to ensure that fuel 37 does not bridge across the apertures 40 or 45 and hinder the free passage of fuel through the arrangement 27. The gas fed in by these two jets also pressurises the "gas lock" provided by the arrangement 27 to the pressure level in chamber 10. The feed of gas to the jets is controlled by respective gas control means 53' and 52'.

The use of carbon dioxide to facilitate movement of the fuel through the arrangement 27 leads to the beneficial effect of that gas being entrained with the fuel and contributing to the incomplete oxidation of volatiles liberated from the bed as the input fuel burns.

In the alternative arrangement shown in Figure 3B parts shown with the same numerals as those of Figure 3A have the same form and will not further be described.

In the arrangement of Figure 3B the plugs 41 and 46 on pivotable arms shown in Figure 3A have been replaced with slider members 60 and 61 moveable by the control systems 43 and 47 respectively between positions opening or closing the apertures 40 and 45 as shown. Again the jet or jets 50 of the arrangement of Figure 3A have been replaced by a second archimedian screw 62. The drive of which is linked to the motor 49 driving screw 48 by a step-up gearing 63. The speed screw 61 rotates is therefore variable but linked to and faster than the speed at which screw 48 is driven. The screw arrangement is water cooled, as shown at 64, and the shaft of the screw 60 itself water cooled as indicated at 65.

In the alternative arrangement of Figure 3B the jets 53 and 54 have been omitted and motor(s) 70 provided to vibrate the hopper arrangement (which may be flexibly mounted) to prevent fuel bridging across the apertures 40 and 45 and hindering flow of fuel to chamber 10. The upper and lower hoppers 38 and 41 may be flexibly interconnected, each being vibratable by motor 70. It will be appreciated that the screws 48 and 62 may be driven to rotate by separate motors linked by the control system such that their exitation causes screw 62 to rotate faster than screw 48.

In the arrangements of both Figures 3A and 3B the controls 43 and 47 are controlled to operate at a speed and rate which is optimal for the production of combustible gas. The controls 43 and 47 are linked such that one or other of the apertures 40 and 45 is always closed by its respective plug (42 or 47) or slider (60 or 61) that is to say before aperture 40 can open aperture 45 must be closed. Similarly aperture 40 must be closed before aperture 45 can open.

In this way the operational pressure within combustion chamber 10 is kept at a selected optimum, super-atmospheric, level.

The feed drive 29 carrying fuel to the arrangement 27 may be a bulk or chain link conveyor, an elevator or any other suitable feeder the speed of which is controllable to ensure that fuel is continually delivered to the upper hopper 38 at a rate which is determined in accordance with the demand for combustible gas placed upon the plant.

It will be seen that the arrangements of Figures 3A and 3B merely show two possible alternative ways in which fuel may be fed in a readily controllable way to chamber 10 and, moreover, in a way enabling the pressure in chamber 10 to be maintained at the desired, optimum, operating level. Clearly other arrangements may be utilised. The means closing the apertures 40 and 45 may be replaced with any suitable alternative form of closure device and the fuel feeder 50 may be formed with any suitable means operable to carry the fuel into chamber 10.

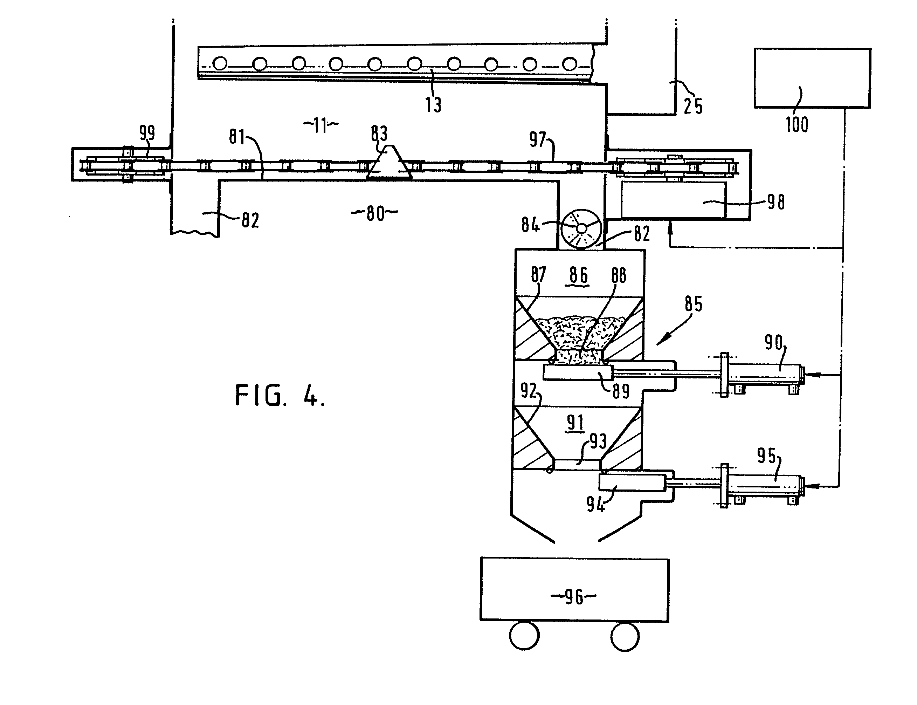

Figures 1 and 2 show at 80 an ash removal system is used to remove from the bed large size particles of ash or other materials passed to, formed or retained in, bed 11. This system will be described with reference to Figure 4.

Figure 4 shows the bottom wall 81 of chamber 10 to be provided at either side with a trough 82 and with a plough 85 resting on wall 81 and driven to reciprocate back and forth between the two troughs 82. Plough 83 is so shaped as to entrap and carry before it larger particles (of a size greater than say 3 mm) whilst smaller particles rise up the plough and pass over it as it moves across wall 81. The larger particles are pushed by the plough 83 towards one or other of the troughs 82 and when the plough 83 reaches a trough 82 (for example the trough to the right of Figure 4) fall into the trough.

At this time a control system monitoring and controlling the position of the plough 83 reverses the drive direction of the plough and activates an archimedian screw 84 within the trough 83. Screw 84 carries material in the trough to a hopper arrangement 85.

Hopper arrangement 85 functions in a manner similar to that of the fuel feed hopper arrangement 27 described with reference to Figure 3, and includes an upper hopper 86, a lower wall 87 of which is pierced by an aperture 88 closeable by a slider 89 under the control of a pneumatic/hydraulic control system 90. Material falling through aperture 88 enters a lower hopper 91, a lower wall 92 of which includes an aperture 93 closeable by a slider 94 under the control of a system 95. Material passing through aperture 93 falls into a collection hopper 96 by which it may be removed for grading to enable reclamation of suitable material for return to bed 11 and dumping of unacceptably large, or fine, particles.

Plough 83 is dragged across bottom wall 81 by a chain 97 coupled to a motor drive system 98 at one side of the chamber 10 and passing round a sprocket 99 at the other side of the chamber. The chain passes through gas tight seals in the wall of the chamber 10 or alternatively the drive motor 98 and sprocket 99 are located within housings pressurised to the level of pressure in chamber 10.

The ash removal system acts to remove large sized ash particles, and particles of other incombustible material which are fed to or are formed in the bed, and which gravitate, in time, below the active zones of the bed and down to the bottom wall 81 of chamber 10.

The arrangement 85 operates to provide a gas seal between the fluidised bed 11 in chamber 10 and atmosphere and for this reason sliders 89 and 94 are moved by their associated control systems 90 and 95 such that one or other of these sliders is at all times in a position closing its associated aperture.

Only one hopper arrangement 85 is illustrated in detail in Figure 4 but it will be appreciated that the other trough 82 (to the left of the Figure) communicates with a hopper arrangement essentially similar to that shown in detail in Figure 4.

It will be appreciated that, as has been described with reference to Figures 3A and 3B above, numerous modifications may be made to the particularly described arrangements without departing from the scope of the invention. An alternative, and in some circumstances preferred arrangement for removing debris from bed 11 could be the provision of a tapering hopper or hoppers under bed 11 leading to a slow rotation archimedian auger feeding down to a double lock discharge system (such as is described with reference to Figure 4) or to a water seal pipe, or any other sealing system which will act to maintain the operational pressure in chamber 10 at the level required.

To start operation of the plant shown in the Figures blower 15 is energised and burner 17 ignited. As a result a flow of heated air passes via air line 16, to plenum chamber 14 and sparge tubes 12 into the bed 11. The hot gases flowing through bed 11 fluidise the bed and heat the material of the bed until the bed reaches a temperature at which fuel fed to the bed burns. Fuel is then fed to the bed via the arrangement 27.

The fuel fed to the hot bed burns and produces a hot gas which rises from the bed and is carried from chamber 10 via the gas outlet and duct 20. The hot gases carried in duct 20 pass to the waste boiler/superheater 19 and the water fed thereto forms steam which is fed via the plenum chamber 14 and sparge pipes 12 (and possibly also via plenum chamber 25 and sparge pipes 13) into bed 11. A part of the gases passing through the boiler/superheater 19 are also fed via the pump 24 (or jet compressor) plenum chamber 25 and sparge pipes 13 into bed 11.

At this time the plant begins to produce a combustible gas, fuel fed to bed 11 is burning in an atmosphere of oxygen and nitrogen (from the air fed to the bed), steam and recycled gases taken from the outlet. This atmosphere is maintained at a level which is too low in oxygen to support complete combustion of the fuel and as a result a combustible gas is generated. At the same time the steam fed to the hot bed is dissociating, and is involved in the water gas reaction leading to the production of even more combustible gas.

As soon as fuel fed to the system is started the direct heating of air fed to bed 11 is discontinued and heater 17 is turned off. Although the reclamation of heat (from the made gas) to pre-heat air fed to the bed may be utilised with advantage. The amount of air supplied to the bed may also be, with advantage, reduced at this stage.

An on-line micro-processor 100 is provided to control the various devices in the plant to optimise the supply of combustible gas. To do this the micro-processor controls settings of blower 15, heater 16, valve 21, pump 24, fuel feed 29, valve 32, valve 36, control 43 for plug 42 or slider 60, control 47 for plug 46 or slider 61, motor (or motors) 49, control 90 for slider 89, control 95 for slider 94 and the drum 96 for plough 83. The micro-processor operates to control the above noted settings in response to monitored parameters in the plant such as the temperature of the bed material, the depth of the bed, the temperature of the produced gas, the water temperature, the pressure levels in the chamber 10 and boiler/superheater 19, and any further combustible gas cooling facilities any or all of which may also be utilised to provide additional alarm signals.

Steam from the boiler/superheater 19 continues to mix with air from blower 15 in plenum chamber 14, and the heat from the steam and the recycled combustible gas, is carried into bed 11 and ensures continued combustion of fuel fed to the bed via the hopper arrangement 27.

The alternative recycle gas route shown in Figure 2 - in which hot gas from the filter is recycled with the use of the jet venturi compressor - provides that the recycled gas is used solely for control of bed dynamic activity and the steam input to the bed is used for attemperation and gasification chemistry.

The described plant makes use of recycled combustible gas and steam as a means of controlling the bed temperature. This control is ready and effective and enables control of the degree of fuel oxidation within the bed, and further promotes shift chemical reaction between the input carbonaceous fuel, steam and the products of partial or complete combustion in the produced gas.

The introduction of the recycled gas into the bed ensures that a substantial proportion of the gas generated in the oxidation zone of the combustor passes again through the bed leading to an extended contact time between those gases and the carbonaceous fuel; thereby encouraging the $CO_2 + C => 2CO$ reaction and the dissociation of water and water vapour in the water gas reaction.

Both this way of producing carbon monoxide and the water gas reaction are endothermic with the result that the need to cool the bed (using steam and recycled gas) is reduced. Thus the air input to the bed can be minimised reducing the amount of nitrogen - an inert gas - fed to the bed. The described plant can in fact operate with very low levels of input air and the subsequent reduction in nitrogen throughput substantially increases the operational efficiency of the plant. The use of a granular filter utilising a high carbon content filter material, such as coke, has a primary function of intercepting fine ash and carbon particles elutriated from bed 11 and a secondary function of providing additional contact time with carbon for gases passing through the filter. This action caters for favourable reactions between the carbonaceous material of the filter and steam and carbon dioxide. Furthermore the use of a granular filter gives the opportunity of incorporating catalysts in the filter to promote steam and carbon dioxide reactions.

The described plant uses a fluidised bed to support the combustion and reduction of the carbonaceous fuels and can utilise almost any carbonaceous fuel irrespective of its quality. Thus fuels may be used which have a high ash and/or moisture content and/or are virtually ungraded and/or include a large proportion of "fines".

Thus the plant now proposed can generate a virtually tar-free combustible gas regardless of the input fuel. Not only is the plant proposed capable of accepting a wide range of fuels it is also operationally efficient.

The gas generated in the plant may be used hot (that is to say after some cooling in the boiler/superheater) or may be further cooled before use to give up useful heat. Heat extracted by further cooling can be used to pre-heat the water fed to the boiler/superheater 19; or even in any other way which is of use e.g. in a district heating scheme.

The extraction from the produced gas of heat carried out of the chamber 10 as an input to the boiler/superheater 19, the use of steam generated in this way both as an input to bed 11, and to power the recycling produced gas to bed 11, will be seen to optimise the efficiency of the proposed plant. The abstraction of recycle gas before cooling in the boiler/superheater 19 means advantage can be taken of using the gas at the highest available temperature.

In designing plant embodying the invention attention should be given to various aspects of the described arrangements.

For example with the fuel feed arrangement of Figure 3A the superheated steam used to carry fuel into chamber 10 promotes the entrainment of cool recycled produced gas adding generally to the gas mass-flow through the plant, in addition to promoting the spread of fuel into the bed free board zone.

The correct proportioning of the steam and/or air entrained with the recycled produced gas and the input fuel effects some modification of volatiles liberated by the thermal shock imposed upon the input fuel as it passes into chamber 10.

The positioning of the entries for recycled produced gas and the input fuel, and of the sparge pipes 12 should be selected so as to inhibit adverse fuel flow particularly of lighter fuel fractions, which might otherwise tend to bridge across the steam jet 50.

The regulation of air and steam flows, the volume of produced gas to be recycled, and the rate of fuel feed are all variables which need to be controlled, in the ways noted above, to optimise the production of combustible gas having regard to the loading, i.e. the amount of gas required from time-to-time.

Desirably control of these variables by the on-line micro-processor 100 is also programmed to adjust these variables over a wide range to suit the requirements (e.g. ash fusion and combustion temperatures) of any particular input fuel.

The described gasifier may be operated either wholly or semi-automatically.

The potential for the produced gas to carry with it dust and heavy tar vapours which must then be screened from the gas can be reduced by optimising the design of chamber 10. We have found that the propensity for the produced gas to carry such contaminants is decreased if there is sufficient distance between the top of the fluidised bed and the gas outlet in chamber 10. Optimisation of the volume above bed 11 in chamber 10 also enables the velocity of gas leaving chamber 10 to be reduced with a subsequent limitation on the size of any particles that gas may be carried with it.

Gas entering the boiler/superheater 19 is at a temperature of approximately $1000^{\circ}C$ giving the advantageous self-steaming capacity for the plant which has been described.

The boiler/superheater 19 provides cooling of the produced gas down to a temperature suitable for distribution and further processing e.g. in a cyclone gas cleaner without the need for a refractory lining of any gas distribution system fed by the plant.

Steam is produced at high temperature and at a useful pressure. The steam is one of the three principle feed stocks to the bed, producing gas and also providing bed temperature control. The chemistry of in-bed reaction producing the combustible gas requires steam as a component of the water gas reaction but the amount of steam fed to the bed 11 can be significantly in excess of the amount required as a reactant in the bed, the excess steam acting to cool the bed and surplus steam will be available for further reaction in the coke in filter 30.

The recycling of produced gas plays an important part in the gasification process now proposed. By varying the rate of gas recycling in inverse proportion to the required gasification rate we are able to achieve constant dynamic bed activity without variation in the exit velocity of gas from the plant. This feature allows optimisation of the design parameters for the plant. The principle reason for recycling produced gas is to maintain the dynamic bed activity irrespective of the plant loading and without significantly altering the level of bed attemperation or the chemistry of reactions taking place in the bed. Where there is an established reaction equilibrium the exposure of the recycled produced gas to the bed does not significantly alter that equilibrium and the chemistry of the reactions in the bed, and elsewhere in the plant, remain substantially unchanged. Importantly this arrangement establishes the ability to maintain a dynamic bed and the advantage of better carbon reactivity.

With the waste heat boiler/superheater 19 at a working pressure of 1720 Kpa the steam/water saturation temperature is just greater than $200^{\circ}$C. Allowing for the temperature drop across the thicknesses of the boiler tube walls the likelihood of oil or tar condensation from the produced gas is slight. With the described plant boiler fouling has been found to be very substantially reduced.

Consideration of the above criteria leads to the choice of a boiler/superheater 19 capable of operating at the highest practical pressure and temperature, for this reason a waste heat boiler operating at a medium rather than a low pressure is preferred. Operation of the boiler at a medium pressure means that advantage can be taken of the energy in the scheme to power the recycling of the produced gas. Furthermore when the saturation temperature is established at or above 200$^{o}$C loading on the superheater is reduced making the unit a more practical and commerically attractive proposition.

### INDUSTRIAL APPLICABILITY

It will be appreciated that the plant now proposed offers an efficient way of generating combustible gas utilising a wide variety of fuel stocks.

## CLAIMS

1. A method of making combustible gas including, passing a fluidising gas to a bed of inert particulate material to fluidise the bed, feeding fuel to the bed for combustion therein, generating and passing steam into the bed such that the partial combustion of fuel, and the partial dissociation and reaction of steam in the bed generates a combustible gas, the method further including recycling at least part of the combustible gas produced back into the bed.

2. A method according to Claim 1, wherein the amount of combustible produced gas which is recycled and passed back to the bed is variable.

3. A method according to Claim 1 or Claim 2, in which heat is passed to the bed by pre-heating air fed to the bed and/or recycling hot produced gas to the bed.

4. Combustible gas producer plant comprising a chamber with a gas outlet for housing a bed of inert particulate material, means for passing gas to fluidise the bed of inert particulate material, means for feeding fuel to the bed for combustion therein, means for generating and passing steam into the bed, means for recycling at least part of the gas leaving the chamber by said outlet back into the bed and means enabling control of the plant such that the partial combustion of fuel and the partial dissociation and reaction of steam in the bed generate a combustible gas.

5.    Plant in accordance with Claim 4, wherein said gas recycling means includes adjustable valve means enabling the amount of gas recycled back into the bed to be varied.

6.    Plant in accordance with Claim 4 or Claim 5, including a waste heat boiler and superheater to which the combustible gas taken from said outlet is passed to generate said steam.

7.    Plant in accordance with Claim 4, Claim 5 or Claim 6, wherein said steam is passed to a jet or venturi compressor usable to power the recycling of said combustible gas into the bed.

8.    Plant in accordance with any one of Claims 4 to 7, further including a filter through which the combustible produced gas taken from the gas outlet is passed in which filter any dust particles, low volatile tars or other contaminents carried by the combustible gas are extracted and are further reacted.

9.    Plant in accordance with Claim 8, wherein said filter includes a highly carbonaceous material such as coke.

10.    Plant in accordance with Claim 9, wherein said coke is supported in a bed of inert particulate material.

11.    Plant in accordance with any one of Claims 4 to 10, in which the fuel feeding means comprises a first hopper to which fuel is fed and which has a closeable outlet aperture leading to a second hopper having a closeable outlet leading to a fuel feeder for feeding the fuel to

0087954

said chamber, means operable to close each said outlet aperture and control means for controlling said closing means to ensure that at least one of said apertures is always closed to provide a gas seal between said chamber and atmosphere.

12. Plant in accordance with Claim 11, wherein each said hopper includes jet means adapted to direct gas to that portion of each said hoppers adjacent the aperture therein to prevent fuel bridging said aperture and preventing free passage of fuel therethrough.

13. Plant in accordance with Claim 11, wherein the fuel feeder means includes means for vibrating the fuel to prevent fuel bridging said apertures and preventing free passage of fuel therethrough.

14. Plant in accordance with any one of Claims 11, 12 and 13, wherein the fuel passing from the second hopper passes to a first screw feeder driven to rotate at a variable rate.

15. Plant in accordance with Claim 14, wherein the fuel feeder means includes a jet or jets directing a stream of steam and fuel passing from the first screw feeder and carrying that fuel into said chamber.

16. Plant in accordance with Claim 14, wherein the fuel feeder means includes a second screw feeder operating a rate faster than the first screw feeder and carrying fuel from the first screw feeder to the chamber.

17. Plant in accordance with any one of Claims 4 to 16, further including ash removal means for removing ash and debris from the bed whilst maintaining a gas seal between the bed and atmosphere.

18. Plant in accordance with Claim 17, wherein the ash removal means includes a first hopper to which bed material is passed and with an outlet leading to a second hopper with an outlet leading to a collector, and means for controlling closure of the outlets of the first and second hoppers such that at least one of said outlets is closed at all times to maintain a gas seal between the bed and atmosphere.

19. Plant in accordance with either one of Claims 16 and 17, wherein the ash removal means includes means for screening material passed to the collector and returning to the bed particles below a predetermined size.

FIG. 1.

1 / 5

0087954

FIG.2.

0087954

## FIG. 3A.

FIG. 3B.

FIG. 4.

## European Patent Office
## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | DE-C- 929 866 (CHEMISCHE WERKE HÜLS) *The whole document* | 1,3,4 | C 10 J 3/54<br>C 10 J 3/56<br>C 10 J 3/50<br>C 10 J 3/52<br>C 10 J 3/84 |
| Y | US-A-2 686 113 (ODELL) *Column 20, line 5 - column 24, line 27* | 1,4,6 | |
| Y | DE-C- 569 211 (METALLGESELLSCHAFT) *The whole document* | 1,2 | |
| Y | FR-A-2 286 874 (STORA KOPPABERGS) *Page 2, lines 27-28; page 3, line 25 - page 4, line 9; page 5, line 39 - page 7, line 21* | 1,3,4,<br>6,19 | |
| A | DE-C- 937 486 (DRAWE) *Pages 4-5, claims* | 1,2,4 | **TECHNICAL FIELDS SEARCHED (Int. Cl. ³)**<br><br>C 10 J |
| A | FR-A-2 392 319 (SAARBERGWERKE) *Page 5, line 11 - page 9, line 9* | 11,14,<br>15 | |
| A | GB-A- 669 050 (KOPPERS) *Page 4, lines 40-47* | 12 | |
|  | --- -/- | | |

The present search report has been drawn up for all claims

| Place of search THE HAGUE | Date of completion of the search 27-05-1983 | Examiner WENDLING J.P. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document. but published on, or after the filing date
D : document cited in the application
L : document cited for other reasons

& : member of the same patent family. corresponding document

EPO Form 1503 03 82

| | **DOCUMENTS CONSIDERED TO BE RELEVANT** | | Page 2 |
|---|---|---|---|

| Category | Citation of document with indication. where appropriate, of relevant passages | Relevant to claim | CLASSIFICATION OF THE APPLICATION (Int. Cl. 3) |
|---|---|---|---|
| A | DE-C- 616 980 (METALLGESELLSCHAFT) *Page 2, lines 57-90* | 11,14, 15,17 | |
| | --- | | |
| A | DE-B-1 021 115 (KOPPERS) *Column 4, lines 10-67* | 17,18 | |
| | ----- | | |
| | | | **TECHNICAL FIELDS SEARCHED (Int. Cl. 3)** |

The present search report has been drawn up for all claims

| Place of search THE HAGUE | Date of completion of the search 27-05-1983 | Examiner WENDLING J.P. |
|---|---|---|